# EUROPÄISCHE PATENTSCHRIFT

(11) **EP 1 066 192 B1**
(45) Veröffentlichungstag und Bekanntmachung des Hinweises auf die Patenterteilung: **13.06.2007**
(21) Anmeldenummer: 99963517.0
(22) Anmeldetag: 14.12.1999
(51) Int. Cl.: B62M 23/02, B62M 7/12, B60K 7/00

(54) **ANTRIEBSEINHEIT FÜR EIN ELEKTRISCH BETRIEBENES FAHRZEUG**
DRIVE UNIT FOR AN ELECTRICALLY OPERATED VEHICLE
UNITE D'ENTRAINEMENT POUR UN VEHICULE ELECTRIQUE

(30) Priorität: 29.01.1999 DE 19903443
(43) Veröffentlichungstag der Anmeldung: 10.01.2001
(73) Patentinhaber: SRAM Deutschland GmbH, 97404 Schweinfurt (DE)
(72) Erfinder: FEY, Rainer, D-97422 Schweinfurt (DE)
(86) Internationale Anmeldenummer: PCT/EP1999/009876
(87) Internationale Veröffentlichungsnummer: WO 2000/044612

(56) Entgegenhaltungen:
- EP-A- 0 561 268
- DE-A- 19 709 579
- US-A- 5 253 724
- US-A- 5 671 821
- US-A- 5 865 267

## Beschreibung

Die Erfindung betrifft eine Antriebseinheit für elektrisch betriebene Fahrzeuge, insbesondere für elektrisch angetriebene Zweiräder, zum Antrieb mindestens eines Laufrades gemäß Oberbegriff vom Anspruch 1.

Mit dem europäischen Patent EP 0 561 268 B1 ist eine Motor-Rad-Antriebs-Einheit bekannt geworden, die ein scheibenähnliches Gehäuse umfaßt, welches einen drehenden und einen festen Abschnitt aufweist, wobei der drehende Abschnitt mit dem Laufrad gekoppelt ist. Der feste Abschnitt ist mit dem Fahrradrahmen verbunden und dient als Träger für einen Radantriebsmotor, der von einer Batterie betrieben wird, sowie ein Drehzahluntersetzungsgetriebe, welches den Motor auf den festen Abschnitt mit dem drehenden Abschnitt verbindet. Der feste Abschnitt weist schließlich noch eine Steuerschaltkreiskomponente einer Steuereinheit auf, die das Motordrehmoment entsprechend dem eingeleiteten Drehmoment über den Pedalantrieb steuert.

Im Dokument US 5,671,821 ist eine elektrische Antriebseinheit gezeigt, die an bestehenden oder bei neuen Fahrrädern eingesetzt werden kann. In einigen offenbarten Ausführungsformen kommen mehrere Elektromotoren zur Anwendung, die über eine gemeinsame Antriebswelle starr miteinander gekoppelt sind. Die Motoren können mit einer elektronischen Steuerung in einer Reihen- oder einer Parallelschaltung betrieben werden. Im Betrieb in der Parallelschaltung werden die Motoren wechselweise einzeln angesteuert, wobei die zwischen 30 Sekunden und einer Minute liegenden Wechselintervalle vorgegeben werden. Damit kann einerseits eine größere Effektivität eines einzeln betriebenen Motors genutzt werden, bei Ausschluß des Problems der Überhitzung.

In der Deutschen Patentanmeldung DE 197 09 579 A1 ist ein elektrischer Einzelradantrieb mit mehreren Motoren offenbart, deren Antriebsleistung durch ein Stirnradsammelgetriebe zusammengeführt wird. Die einzelnen, kleineren Elektromotoren haben eine geringere axiale Baulänge. Damit wird erreicht, dass nur wenig axialer Bauraum benötigt wird und mehr Platz im angrenzenden Bereich für andere Zwecke zur Verfügung gestellt werden kann.

Das Ziel der vorliegenden Erfindung liegt in der Bereitstellung einer elektrischen Antriebseinheit, die sowohl durch die Verwendung von kleinen, in großen Stückzahlen gefertigten Elektromotoren kostengünstig ist, als auch durch die Art der elektronischen Ansteuerung bei der Einspeisung der Energie des elektrischen Akkumulators eine optimale Ausnutzung dieser Energie gewährleistet.

Die elektrische Energie wird von einer Batterie bereitgestellt, die insbesondere beim Start des Fahrzeuges aufs Höchste belastet wird, da der Elektromotor besonders in unteren Drehzahlen hohe Drehmomente zu entwickeln im Stande ist. Inzwischen ist die Entwicklung auf dem Gebiete der Herstellung von hochstromfesten Batterien fortgeschritten, so daß es möglich ist, beispielsweise mit NiCa-Batterien wenigstens kurzzeitig hohe Stromstärken bereitzustellen. Der Nachteil hierbei ist, daß solche Batterien sowohl teuer als auch nur begrenzt haltbar sind. Außerdem ist die Wiederaufladbarkeit bestimmten Regeln unterworfen, denen sich ein Benutzer eines motorangetriebenen Fahrrades nicht immer unterwirft. So ist beispielsweise die Wiederaufladung teilentladener Batterien problematisch, da aufgrund des Memory-Effektes die volle Kapazität nicht mehr genutzt werden kann. Vergleicht man ferner eine NiCa-Batterie mit einer Bleibatterie mit je gleicher Speicherfähigkeit, so belaufen sich die Beschaffungskosten der Bleibatterie auf etwa ein Fünftel der Beschaffungskosten einer NiCa-Batterie. Die Vorteile einer Bleibatterie liegen zudem in ihrer weltweit geregelten Entsorgung sowie in der Tatsache, daß kein giftiges Cadmium verwendet wird.

Die vorgeschlagene Antriebseinheit für elektrisch betriebene Fahrzeuge betrifft eine Antriebslösung, die sich zum Ziel gesetzt hat, in erster Linie mit herkömmlichen Bleiakulumatoren als Batterie zusammenzuwirken. Weil die Batterie durch ein Übermaß an Stromstärke durch den Antrieb geschädigt werden kann, wird vorgeschlagen, zum Antrieb eines Laufrades zwei Motoren vorzusehen, die von einer elektronischen Steuereinheit entweder elektrisch wahlweise in Reihe oder parallel geschaltet oder durch eine pulsweitenmodulierte Ansteuerung bei Parallelschaltung nur phasenweise belastet werden. Für den Start des Fahrzeuges wird vorgeschlagen, die beiden Motoren in Reihe zu schalten und bei Erreichen einer bestimmten Drehzahl, die einer geringen Geschwindigkeit des Fahrzeuges entspricht, die Schaltung für Elektromotoren auf Parallelbetrieb umzustellen.

Durch die Aufteilung der Energie auf zwei Motoren wird die Hälfte der zuleitungsbedingten Verlustleistung vermieden und Spannungsabfall und Spitzenstrom halbiert, was zu folgenden Vorteilen führt:
- Die Batterie wird nicht mehr durch hohe Spitzenströme belastet, was dazu führt, daß anstelle von teuren NC-Akkus preiswerte Blei-Akkus eingesetzt werden können.
- Durch Halbierung des Spannungsabfalls kann mit niedrigerer Batteriespannung gearbeitet werden, wodurch Standardbatterien einsetzbar sind.
- Durch den geringeren Energieverbrauch kann die Batteriekapazität und damit das Gewicht gesenkt werden.

Von Vorteil ist ferner die Tatsache, daß sich der konstruktive Aufbau einer Antriebseinheit für elektrisch betriebene Fahrzeuge mit zwei Elektromotoren günstiger bewerkstelligen läßt, als eine solche mit nur einem Motor. Es war ferner das Ziel der vorgeschlagenen Konstruktionen, die Kosten für die Bereitstellung der Elektromotoren klein zu halten, was eindrucksvoll durch die Verwendung von kleinen Motoren gelungen ist, die in großen Serien für andere Zwecke auf dem Markt erhältlich sind.

Es hat sich schließlich als vorteilhaft herausgestellt, daß die Leistungstransistoren zur modulierten Bestromung der einzelnen Motoren kostengünstig zu beschaffen und in ihren thermischen Reaktionen besser beherrschbar sind, als ein einzelner Leistungstransistor für einen großen Elektromotor.

Die pulsweitenmodulierte Ansteuerung der beiden Elektromotoren wird für mittlere Geschwindigkeiten des Fahrrades bis zu einem Tastverhältnis von 50 % verwendet, wobei die Bestromungsphase des einen Elektromotors mit der Leerlaufphase des anderen Elektromotors und umgekehrt zusammenfällt. Zur Schonung der Batterie übersteigt das Tastverhältnis die 50% Marke nicht. Lediglich in oberen Drehzahlen, wenn die Elektromotoren mit geringerer Stromstärke laufen, wird das Tastverhältnis zwischen 50% und 100% ausgenutzt, wobei 100% den Zustand der Höchstgeschwindigkeit des Fahrzeuges entspricht.

Ein weiterer Vorteil ergibt sich dadurch, daß alle Regelungen der elektronischen Steuereinheit drehzahlabhängig erfolgen können. Hierzu ist es erforderlich, daß die Pedaldrehzahl und die Drehzahl des Laufrades ständig verglichen werden, wobei im Falle des vorgeschlagenen Ausführungsbeispiels einer Antriebseinheit elektrische Energie nur bei einer geschwindigkeitsproportionalen Pedaldrehzahl freigegeben wird. Hierdurch wird auf einfache Weise gewährleistet, daß zum Antrieb des Fahrrades immer Muskelkraft eingesetzt wird.

Beide vorgenannten Drehzahlen können in der Antriebseinheit abgefragt werden. Für die Erfassung der Drehzahl des Laufrades sind am Umfang der Nabe mehrere Magnete angebracht, welche über einen Reedschalter abgefragt werden.

Für die Erfassung der Pedaldrehzahl ist auf dem Planetenradträger der integrierten Mehrgangnabe ein mehrpoliger Magnetring angebracht. Zwei drehwinkelversetzte Hallsensoren detektieren durch das Aluminiumgehäuse die Drehzahl und die Drehrichtung des Magnetringes. Zur Regelung werden nur die Übergänge zwischen den Nord- und Südpolen der Magnete verwendet. Diese repräsentieren definierte Winkel am Umfang und ermöglichen eine genaue Regelung.

Für die Regelung werden die Winkelgeschwindigkeiten von Laufrad und Planetenradträger verglichen. Überschreitet die Differenz einen vorgegebenen Faktor, wird die Antiebseinheit abgeschaltet. Durch die Vorgabe eines Faktors anstelle eines festen Wertes kann bei höheren Geschwindigkeiten wesentlich schneller abgeschaltet werden, was die Sicherheit erhöht.

Es ergibt sich somit die Aufgabe für die Erfindung, eine Antriebseinheit für elektrisch betriebene Fahrzeuge zu schaffen, die mit normalen Bleibatterien betreibbar ist und bei Integration der Muskelkraft beim Pedalieren eine Stromzumessung aufweist, mit der eine bessere Ausnutzung der Batterie für die Erzielung einer möglichst großen Fahrstrecke bei möglichst geringem Batteriegewicht verbunden ist.

Zur Lösung dieser Aufgabe sind in einem gemeinsamen Nabenkörper eine Schaltung zur Anpassung der Muskelkraft, zwei getrennt ansteuerbare Elektromotoren sowie eine Steuerelektronik und eine Kupplung als Überbrückung einer Freilaufkupplung vorgesehen.

Ein Ausführungsbeispiel einer Antriebseinheit wird anhand von Prinzipskizzen erläutert.
Es zeigen:
- Fig. 1: einen Nabenkörper einer Antriebseinheit zum Einbau in ein Laufrad eines Fahrrades, umfassend einen Getriebeträger mit mindestens einem Elektromotor, mit einer elektronischen Steuereinheit, mit einem Getriebe und mit einer Kupplung zur Überbrückung eines Freilaufes in schematischer Darstellung;
- Fig. 2: die Anordnung des Getriebes auf dem Getriebeträger mit zwei Elektromotoren und einem Hohlrad zur Weiterleitung des aufgebrachten Drehmomentes an das Laufrad.

Die Erfindung betrifft eine Antriebseinheit mit einem gemeinsamen Nabenkörper auf einer feststehenden Achse 1, die zu einer Mehrgangnabe 2 mit einem Antriebsritzel 3 gehört, welche das hier ankommende Drehmoment auf eine Nabenhülse 4 in ein Nabengehäuse 5 des Nabenkörpers weiterleitet. Das Nabengehäuse 5 weist Speichenflansche 6 auf, die mit einem Laufrad des Fahrzeuges über Speichen verbunden sind. Zu dem gemeinsamen Nabenkörper gehört ein Getriebeträger 10, der drehfest mit der Achse 1 verbunden ist und als Montageträger für zwei Elektromotoren E1 und E2, für eine Getriebe 8, für eine Kupplung 13 und für eine elektronische Steuereinheit 15 dient.

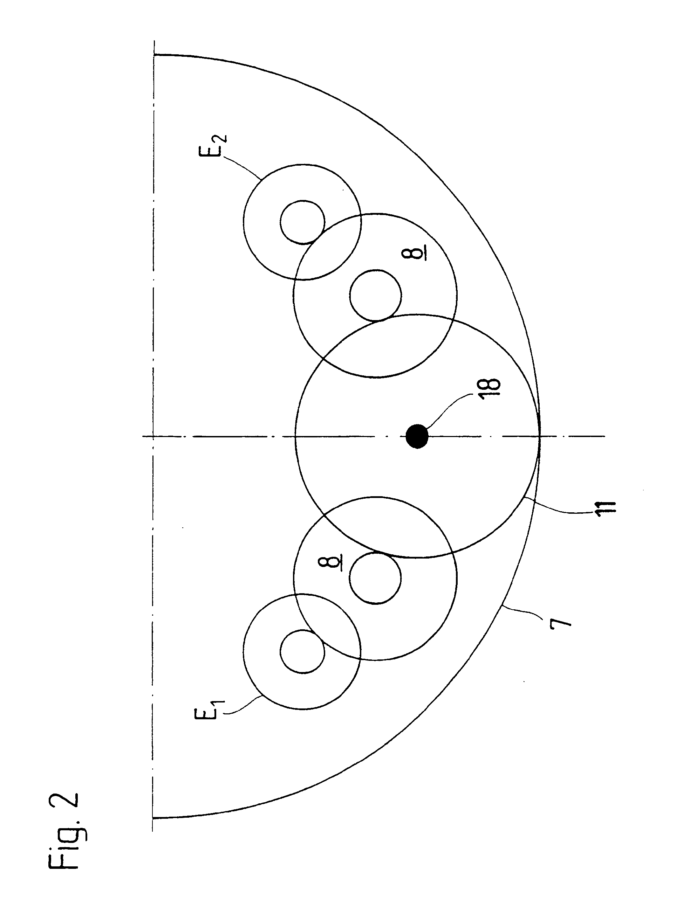

Gemäß Fig. 2 wird dargestellt, wie die Elektromotoren E1 und E2 über das Getriebe 8 mit einem Getrieberad 11 zusammenwirken. Das Getrieberad 11 ist mit einer gemeinsamen Welle 18 verbunden, die somit von beiden Elektromotoren E1 und E2 antreibbar ist. Der Drehmomentfluß, ausgehend von den Elektromotoren 1 und 2 wird sodann von der gemeinsamen Welle 18 über eine Freilaufkupplung 16 auf ein Antriebszahnrad 9 übertragen, welches mit einem Hohlrad 7 zusammenwirkt, das mit dem Nabengehäuse 5 und somit mit dem Laufrad des Fahrzeuges direkt verbunden ist.

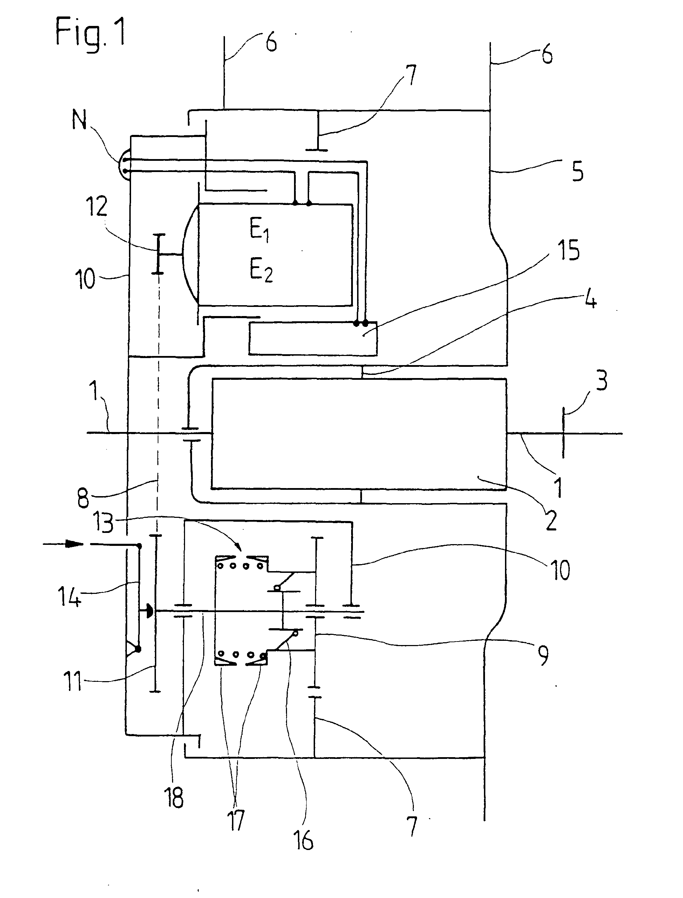

Gemäß Fig. 1 wird also der Kraftfluß von einem Motorzahnrad 12 an jedem der Elektromotoren E1 und E2 über das Getriebe 8, das Getrieberad 11, die Welle 18, den Freilauf 16, das Antriebszahnrad 9 auf das Hohlrad 7 laufen, wobei der Kraftfluß in der entgegengesetzten Richtung durch den Freilauf 16 unterbrochen ist. Es sei denn, der Freilauf 16 wird in der freilaufenden Drehrichtung überbrückt, was durch die Kupplung 13 möglich ist, die über Klauen 17 verfügt, welche durch eine Betätigung 14 in Eingriff bringbar sind. Eine solche Ausschaltung des Freilaufes 16 wird dann erforderlich, wenn die Stromquelle ein Bordnetz N im Fahrzeug nicht mehr speisen kann. Für einen solchen Fall ist vorgesehen, daß das Nabengehäuse 5 des Nabenkörpers vom Laufrad her angetrieben wird und mindestens einen der beiden Elektromotoren E1 oder E2 über das Getriebe 8 rückwärts antreibt. Der Motor E 1 und/oder E2 läuft sodann im Generatorbetrieb und speist das Bordnetz N und die dort angeschlossene Beleuchtung des Fahrzeuges. Der Antrieb wird durch Pedalieren über das Antriebsritzel 3 auf das Nabengehäuse 5 übertragen.

Der Vorteil der Verwendung von zwei Motoren ist nicht nur für den Einbau in Antriebseinheiten für Laufräder in Zweiradfahrzeugen beschränkt. Vielmehr ist das Prinzip auf alle batteriegespeisten Fahrzeugantriebe anwendbar, wo es erforderlich ist, auf die Stromfestigkeit dieser Batterien Rücksicht zu nehmen und Fahrbetriebe mit besonders günstigen Wirkungsgraden zu erzielen.

## Patentansprüche

1. Eine Antriebseinheit für elektrisch betriebene Fahrzeuge zum Antrieb mindestens eines Rades, wobei die Antriebseinheit zwei Elektromotoren (E1, E2) und eine elektronische Steuereinheit (15) zur Bestromung der zwei Elektromotoren enthält, in einer Weise, dass beim Beschleunigen aus dem Stillstand und in einem niedrigen Bereich der Motorgeschwindigkeit die zwei Motoren in einer elektrischen Reihenschaltung und in einem höheren Bereich der Motorgeschwindigkeit die einer elektrischen Parallelschaltung geschaltet werden,
wobei weiterhin ein elektrischer Akku als Energiequelle für die zwei Elektromotoren dient **dadurch gekennzeichnet, dass** die zwei Elektromotoren elektronisch zwischen allen Betriebszuständen umgesteuert werden und mit pulsweitenmoduliertem Strom angesteuert werden,
wobei die elektronische Steuereinheit (15) die Pulsweite regelt, und
dass die pulsweitenmodulierte Ansteuerung derart ausgelegt ist, dass bei Parallelschaltung der Elektromotoren (E1, E2) die Bestromungsphase des einen Elektromotors (E1) mit der Leerlaufphase des anderen Elektromotors (E2) zusammenfällt.

2. Antriebseinheit nach Anspruch 1,
**dadurch gekennzeichnet,**
**daß** die Elektromotoren (E1,E2) Gleichstrommotoren sind.

3. Antriebseinheit nach Anspruch 2,
**dadurch gekennzeichnet,**
**daß** die Elektromotoren (E1,E2) Permanentmagnete enthalten.

4. Antriebseinheit nach Anspruch 2 oder 3,
**dadurch gekennzeichnet,**
**daß** die für die beiden Elektromotoren (E1,E2) abwechselnd gesteuerten Bestromungsphasen bis zu einer vorgegebenen Drehzahl der Elektromotoren (E1,E2) 50% der Gesamtphase nicht übersteigen.

5. Antriebseinheit nach einem der Ansprüche 1 bis 4,
**dadurch gekennzeichnet,**
**daß** mindestens einer der beiden Elektromotoren (E1,E2) als Generator zur Energieerzeugung für das Bordnetz des Fahrzeuges betreibbar ist für den Fall, daß die Energiezumessung ausgefallen ist.

6. Antriebseinheit nach Anspruch 5,
**dadurch gekennzeichnet,**
**daß** eine Kupplung (13) als Überbrückung einer Freilaufkupplung (16) vorgesehen ist, die den Antrieb des als Generator wirkenden Elektromotors (E1, E2) über das Getriebe (8) sicherstellt, wenn das Laufrad fremd angetrieben wird.

7. Eine Antriebseinheit nach Anspruch 1,
**dadurch gekennzeichnet,**
**dass** die Antriebseinheit weiterhin Sensoren aufweist für die Erkennung der Drehgeschwindigkeit an mindestens einem von Laufrad des Fahrzeuges oder Nabengehäuse (5), der von außen angetrieben wird.

8. Eine Antriebseinheit nach Anspruch 7,
**dadurch gekennzeichnet,**
**dass** die Antriebseinheit abgeschaltet wird, wenn die Winkelgeschwindigkeitsdifferenz des Laufrades des Fahrzeuges gegenüber dem Planetenradträger einen vorbestimmten Faktor überschreitet.

## Claims

1. Drive unit for electrically powered vehicles for driving at least one wheel, the drive unit containing two electric motors (E1, E2) and an electronic control unit (15) for supplying current to the two electric motors in such a way that the two motors are electrically connected in series during acceleration from a standstill and in a low motor speed range and are electrically connected in parallel in a higher motor speed range, an electric storage battery furthermore serving as the energy source for the two electric motors,
**characterized in that**
the two electric motors are electronically changed over between all operating states and are actuated by pulse-width modulated current, the electronic control unit (15) regulating the pulse width, and **in that** the pulse-width modulated actuation is designed in such a way that with the electric motors (E1, E2) connected in parallel the current supply phase of one electric motor (E1) coincides with the open-circuit phase of the other electric motor (E2).

2. Drive unit according to Claim 1,
**characterized in that**
the electric motors (E1, E2) are direct current motors.

3. Drive unit according to Claim 2,
**characterized in that**
the electric motors (E1, E2) contain permanent magnets.

4. Drive unit according to Claim 2 or 3,
**characterized in that**
up to a predetermined speed of the electric motors (E1, E2) the current supply phases, alternately controlled for the two electric motors (E1, E2), do not exceed 50% of the overall phase.

5. Drive unit according to one of Claims 1 to 4,
**characterized in that**
at least one of the two electric motors (E1, E2) can be operated as generator to generate power for the vehicle electrical system should the measured power supply feed fail.

6. Drive unit according to Claim 5,
**characterized in that**
a lockup clutch (13) is provided for the freewheel clutch (16), which lockup clutch ensures that the electric motor (E1, E2) acting as generator is driven by way of the transmission (8) when the wheel is externally driven.

7. Drive unit according to Claim 1,
**characterized in that**
the drive unit also has sensors for identifying the rotation speed at at least the wheel of the vehicle or the hub housing (5) which is driven externally.

8. Drive unit according to Claim 7,
**characterized in that**
the drive unit is switched off if the difference in angular velocity between the wheel of the vehicle and the planet carrier exceeds a predetermined factor.

## Revendications

1. Unité d'entraînement pour un véhicule à propulsion électrique pour entraîner au moins une roue, l'unité d'entraînement comprenant deux moteurs électriques (E1, E2) et une unité de commande électronique (15) pour l'alimentation électrique des deux moteurs électriques de telle sorte que lors d'une accélération à partir de l'arrêt et dans une basse plage du régime du moteur, les deux moteurs sont branchés en un circuit électrique série, et dans une plage plus haute du régime du moteur, ils sont branchés en un circuit électrique parallèle, un accumulateur électrique servant en plus de source d'énergie pour les deux moteurs électriques, **caractérisée en ce que** tous les états de fonctionnement des deux moteurs électriques sont commandés électroniquement et ces derniers sont excités par un courant modulé en largeur d'impulsions, l'unité de commande électronique (15) régulant la largeur des impulsions, et **en ce que** l'excitation modulée en largeur d'impulsions est conçue de telle sorte que lors du branchement en parallèle des moteurs électriques (E1, E2), la phase d'alimentation électrique de l'un des moteurs électriques (E1) coïncide avec la phase d'inertie de l'autre moteur électrique (E2).

2. Unité d'entraînement selon la revendication 1, **caractérisée en ce que** les moteurs électriques (E1, E2) sont des moteurs à courant continu.

3. Unité d'entraînement selon la revendication 2, **caractérisée en ce que** les moteurs électriques (E1, E2) contiennent des aimants permanents.

4. Unité d'entraînement selon la revendication 2 ou 3, **caractérisée en ce que** jusqu'à une vitesse de rotation prédéfinie des moteurs électriques (E1, E2), les phases d'alimentation électrique commandées en alternance pour les deux moteurs électriques (E1, E2) ne dépassent pas 50 % de la phase totale.

5. Unité d'entraînement selon l'une des revendications 1 à 4, **caractérisée en ce qu'**au moins l'un des deux moteurs électriques (E1, E2) peut fonctionner en tant que générateur pour la production d'énergie destinée au réseau de bord du véhicule dans le cas où la distribution d'énergie est tombée en panne.

6. Unité d'entraînement selon la revendication 5, **caractérisée en ce qu'**il est prévu un accouplement (13) faisant office de pontage d'un accouplement à roue libre (16), lequel garantit l'entraînement du moteur électrique (E1, E2) servant de générateur par le biais de la transmission (8) lorsque la roue mobile est entraînée depuis l'extérieur.

7. Unité d'entraînement selon la revendication 1, **caractérisée en ce que** l'unité d'entraînement présente en plus des capteurs pour détecter la vitesse de rotation sur au moins l'un parmi la roue mobile du véhicule ou le carter de moyeu (5) qui est entraîné(e) depuis l'extérieur.

8. Unité d'entraînement selon la revendication 7, **caractérisée en ce que** l'unité d'entraînement est mise hors circuit lorsque la différence de vitesse angulaire entre la roue mobile du véhicule et le porte-pignons dépasse un facteur prédéfini.
